# EUROPÄISCHE PATENTSCHRIFT

(11) **EP 1 065 770 B1**
(45) Veröffentlichungstag und Bekanntmachung des Hinweises auf die Patenterteilung: **11.08.2004**
(21) Anmeldenummer: 00112927.9
(22) Anmeldetag: 20.06.2000
(51) Int. Cl.: H02G 3/04

(54) **Leitungsführungskanal**
Conduit channel
Canalisation pour conduites

(30) Priorität: 01.07.1999 DE 29911426 U
(43) Veröffentlichungstag der Anmeldung: 03.01.2001
(73) Patentinhaber: Tehalit GmbH & Co. KG, 67716 Heltersberg (DE)
(72) Erfinder: Wittmann, Jan, 67714 Waldfischbach (DE)
(74) Vertreter: Patentanwälte Möll und Bitterich

(56) Entgegenhaltungen:
- EP-A- 0 838 885
- CH-A- 445 595
- DE-A- 2 123 958
- DE-A- 4 103 707

## Beschreibung

Die Erfindung betrifft Leitungsführungskanäle gemäß dem Oberbegriff des Anspruchs 1.

Leitungsführungskanäle sind seit über 100 Jahren bekannt und in Gebrauch. Ursprünglich aus Holz und Metall hergestellt, bestehen Sie heute überwiegend aus Kunststoff, insbesondere thermoplastischem Kunststoff. Leitungsführungskanäle aus Aluminium oder Stahlblech sind ebenfalls in Gebrauch.

Leitungsführungskanäle der hier relevanten Art bestehen im wesentlichen aus einem Unterteil mit einem etwa U- bzw. C-förmigen Querschnitt und einem lösbar aufsetzbaren Deckel. In das Unterteil werden elektrische Leitungen, beispielsweise für Starkstrom oder Telekommunikation, eingelegt. In manchen Fällen werden auch Rohrleitungen, beispielsweise Heizungsrohre, in derartigen Kanälen verlegt.

Sind diese Leitungsführungskanäle an Wänden und insbesondere an Decken befestigt, so können die darin verlegten Leitungen bei abgenommenem Deckel aus der offenen Vorderseite des Kanalunterteils herausfallen. Um dies zu verhindern, werden spezielle Klammern verwendet, die die offene Vorderseite des Unterteils überbrücken und gegenseitig beabstandet sind. Beispiele für solche Klammern finden sich in der DE-AS 20 17 232, DE-AS 21 09 613, DE-AS 22 45 626, US 3 890 459, DE-PS 24 08 310, DE-AS 21 23 958, DE-A 41 03 707 oder EP-A 0 838 885.

Aus der DE-AS 21 23 958 schließlich sind Klammern für Leitungsführungskanäle bekannt, die zwischen einer ersten Winkelposition, die parallel zur Längsrichtung der Kanäle orientiert ist, und einer zweiten Winkelposition, die sich im rechten Winkel dazu erstreckt, verschwenkt werden können. Die Klammern sind zu diesem Zweck mit einer Drehachse ausgerüstet, die in einer Bohrung im Kanalunterteil gelagert ist, wobei durch geeignete Konstruktion dafür gesorgt wird, dass die Klammer nur in der ganz geöffneten Position montiert und demontiert werden kann.

Klammern für Leitungsführungskanäle sollen nicht nur verhindern, dass bei abgenommenem Deckel bereits eingelegte Leitungen herausfallen können, sondern auch das Kanalunterteil zusätzlich stabilisieren. Gleichzeitig soll das nachträgliche Einlegen oder Herausnehmen von Leitungen möglich sein.

Üblicherweise werden die Leitungsführungskanäle ohne Klammern ausgeliefert. Werden diese im konkreten Anwendungsfall jedoch benötigt, muss der Installateur sie mitbestellen und auf der Baustelle von Hand montieren. Dies bedingt einen zusätzlichen Zeit- und Kostenaufwand. Wurde vergessen, die nötige Anzahl von Klammern gleich mitzubestellen, verzögern sich die Installationsarbeiten. Auch besteht die Gefahr, dass die losen Klammern verloren gehen. Der Versuch, diese Probleme dadurch zu beheben, dass die Klammern werksseitig montiert werden, hätte einen noch größeren Zeit- und Kostenaufwand zur Folge, weil der Installateur dann jede Klammer auf der Baustelle zunächst wieder lösen müsste. Um diese Probleme wenigstens teilweise zu beseitigen, wird in der DE-A 41 03 707 vorgeschlagen, die Klammern werksseitig am Boden des Kanalunterteils zu befestigen. Auf diese Weise können zwar die Klammern nicht vergessen werden oder verloren gehen; der Installateur muss jedoch jede Klammer vom Kanalboden abziehen und von Hand montieren. Auch das ist unbefriedigend.

Der vorliegenden Erfindung liegt daher die Aufgabe zugrunde, einen Leitungsführungskanal der eingangs genannten Art anzugeben, bei dem die Klammern bereits werksseitig montiert werden können, ohne dass auf der Baustelle ein zusätzlicher Zeit- und Kostenaufwand entsteht.

Diese Aufgabe wird durch einen Leitungsführungskanal mit den Merkmalen des Anspruchs 1 gelöst.

Dank der vorliegenden Erfindung können die Klammern bereits werksseitig montiert werden, und zwar ohne dass am Kanalunterteil irgendwelche Bohrungen, Stanzungen oder sonstige Bearbeitungsvorgänge erforderlich sind. Dabei werden die Klammern so montiert, dass sie sich parallel zur Kanallängsrichtung erstrecken, so dass die Front des Kanalunterteils offen bleibt.

Während der Installationsarbeiten kann der Installateur die Klammer nach rechts oder links schieben oder mit einer leichten Handbewegung aus ihrer Lager- und Transportposition so verschwenken, dass die bereits verlegten Leitungen nicht herausfallen, Leitungen jedoch noch eingelegt oder wieder herausgenommdn werden können. Nach Beendigung der Installationsarbeiten schwenkt der Installateur die Klammer dann in die Endposition quer zur Kanallängsrichtung und verrastet das am Klammerkopf angebrachte Rastelement hinter dem Wulst der korrespondierenden Frontleiste.

Vorteilhafterweise ist der Kopf der Klammer gegenüber dem Mittelteil abgekröpft. Dies erleichtert das Einrasten des Klammerkopfes hinter dem Wulst.

Vorzugsweise ist im Bereich der Abkröpfung zwischen Kopf und Mittelteil ein Schlitz vorgesehen, der mit der Frontleiste, auf die die Klammer aufgesteckt ist, und deren Wulst kooperiert. Dank dieses Schlitzes umgreift die Klammer in der Lager- und Transportposition die Frontleiste, das Kanalunterteil bleibt optimal offen.

Gemäß einer Ausgestaltung der Erfindung ist im Bereich des Fußes ein Rastnocken vorgesehen, der hinter dem Wulst lösbar einrastet und somit eine bestimmte Winkelposition der Klammer definiert. Dabei handelt es sich vorzugsweise um die Endstellung, so dass die Klammer in der Endstellung gegen ein versehentliches Verschwenken gesichert ist.

Gemäß einer bevorzugten Ausgestaltung sind Rastnocken und zweiter Haltezapfen am Fuß der Klammer nebeneinander positioniert, so dass der Rastnocken sich an der Unterseite der Frontleiste verhakt.

Gemäß einer Weiterbildung der Erfindung ist im Bereich des Fußes ein Nocken vorgesehen, der mit dem Wulst kooperiert und so eine bevorzugte Winkelposition der Klammer definiert. Dies kann beispielsweise die 45°-Position sein.

Gemäß einer alternativen Ausgestaltung ist der zweite Haltezapfen als polygonaler Zylinder ausgebildet, dessen ebene Wandflächen mit dem Wulst kooperieren und so bevorzugte Winkelpositionen der Klammer definieren. Dies können beispielsweise die 0°-Stellung, die 45°-Stellung und die 90°-Stellung sein. Der eben erwähnte zusätzliche Nocken ist dabei nicht mehr erforderlich.

Vorzugsweise ist an der Unterseite des Kopfes ein als Montagehilfe wirkender Keil vorgesehen. Mit Hilfe dieses Keils lässt sich der Klammerkopf auch in der 90°-Endstellung durch einfachen Fingerdruck unter der Frontleiste verhaken.

Gemäß einer Weiterbildung der Erfindung ist am Mittelteil der Klammer eine Versteifungsrippe vorgesehen.

Anhand der Zeichnung soll die Erfindung in Form von Ausführungsbeispielen näher erläutert werden. Es zeigen
- Fig. 1: einen Abschnitt eines Leitungsführungskanals mit einer Klammer in Lager-und Transportposition,
- Fig. 2: den Kanalabschnitt der Fig. 1 mit teilweise hochgeschwenkter Klammer,
- Fig. 3: den Kanalabschnitt der Fig. 1 mit in die Endstellung geschwenkter, noch nicht verrasteter Klammer,
- Fig. 4: den Kanalabschnitt der Fig. 3 mit verrasteter Klammer,
- Fig. 5: den Kanalabschnitt der Fig. 3 als Seitenansicht,

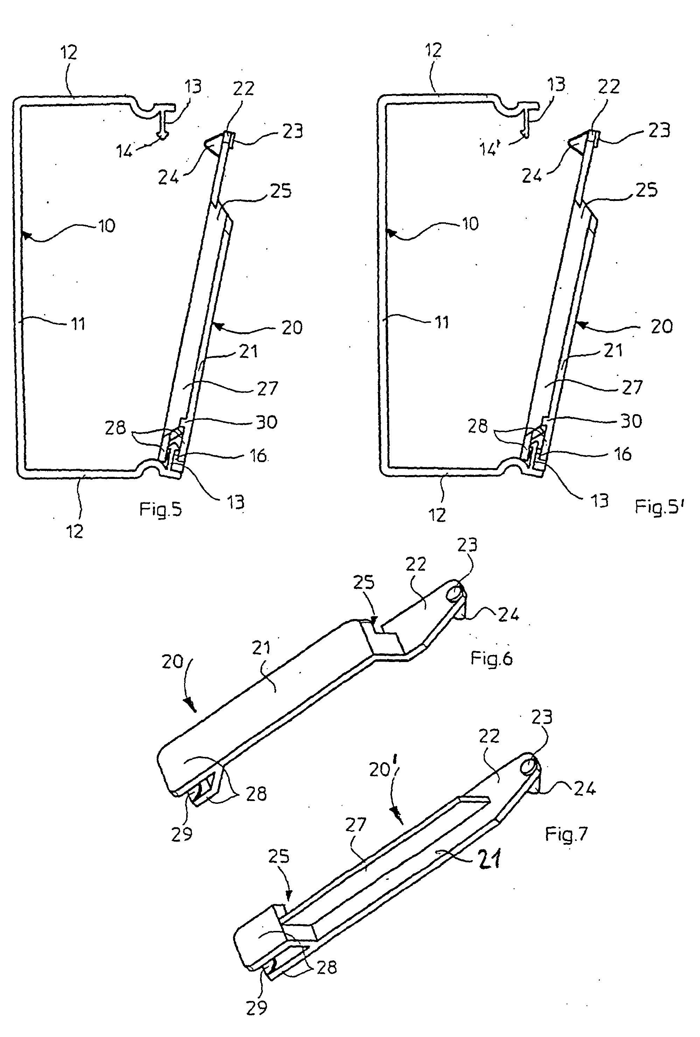

- Fig. 5': einen geänderten Kanalabschnitt als Seitenansicht,
- Fig. 6: eine perspektivische Darstellung der Oberseite einer ersten Klammer in vergrößertem Maßstab,
- Fig. 7: eine perspektivische Darstellung der Oberseite einer zweiten Klammer,

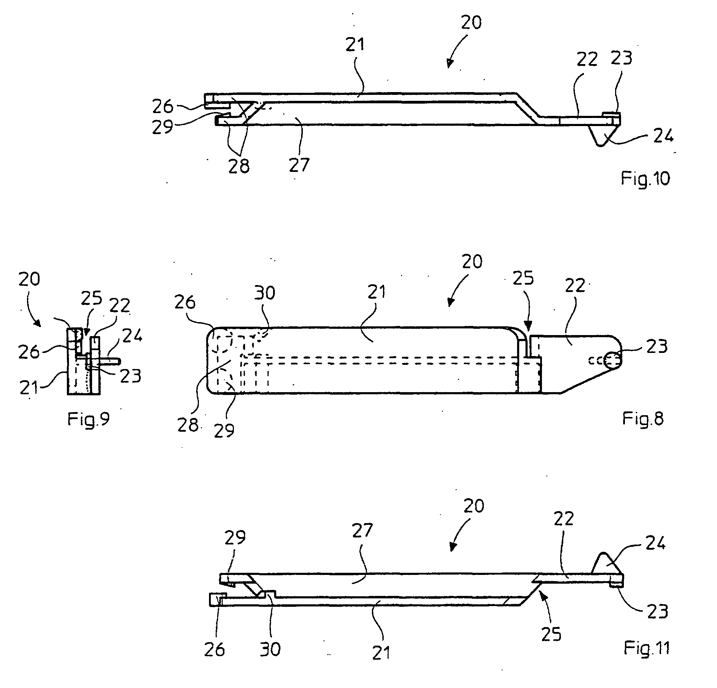

- Fig. 8: eine Draufsicht auf die Klammer der Fig. 6,
- Fig. 9: eine Frontsicht zur Fig. 7,

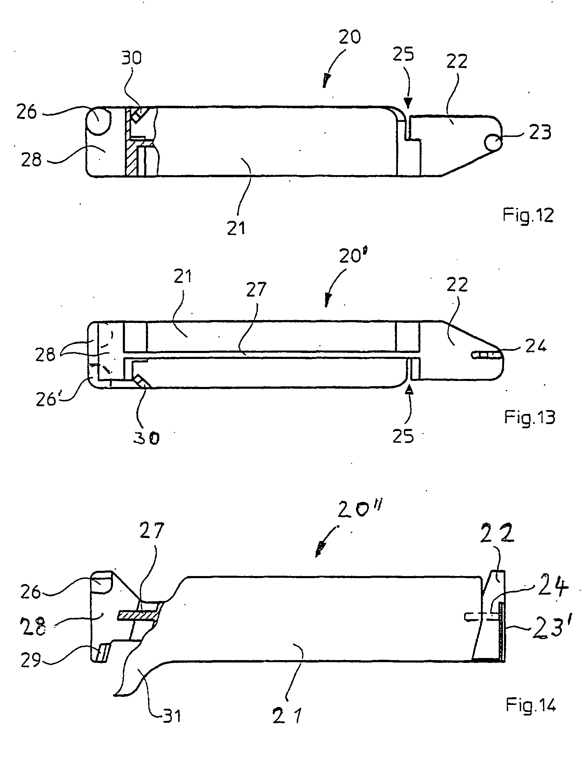

- Fig. 10: eine erste Seitenansicht zur Fig. 7,
- Fig. 11: eine zweite Seitenansicht zur Fig. 7
- Fig. 12: eine Draufsicht auf die Oberseite der Klammer der Fig. 8 bis 11 mit teilweise aufgebrochenem Fuß,
- Fig. 13: eine Draufsicht auf die Unterseite der zweiten Klammer von Fig. 7 und
- Fig. 14: eine Draufsicht auf die Oberseite einer dritten Klammer mit teilweise aufgebrochenem Fuß.

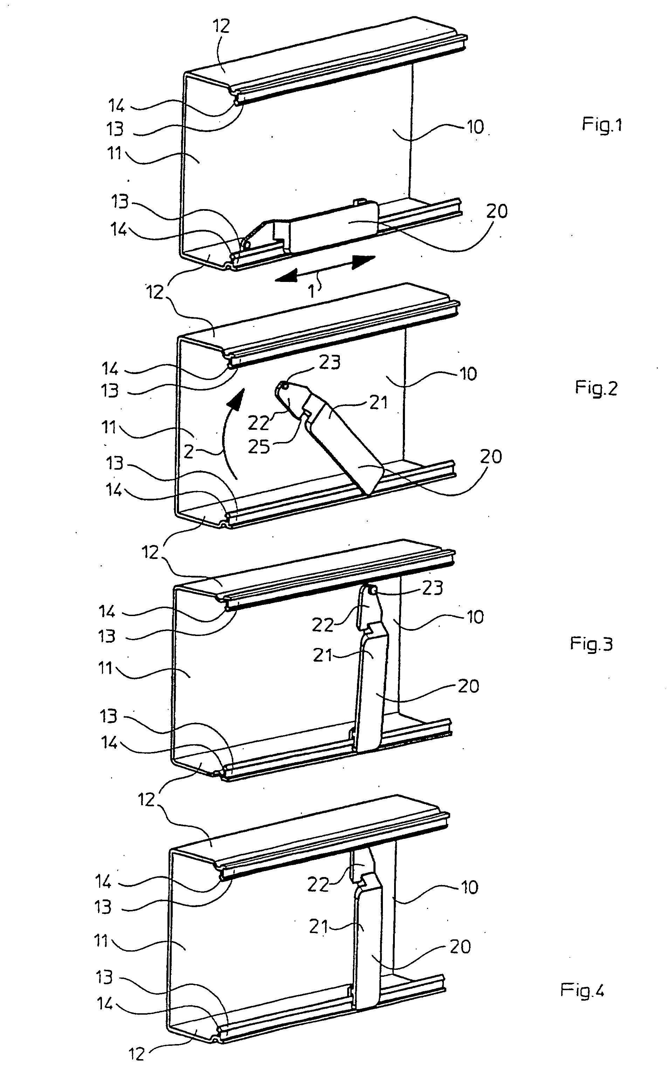

Fig. 1 zeigt in perspektivischer Darstellung ein Unterteil 10 eines Leitungsführungskanals, bestehend aus einem Boden 11, zwei Seitenwänden 12 und zwei Frontleisten 13, die sich im wesentlichen parallel zum Boden 11 erstrecken. An den freien Kanten der Frontleisten 13 ist jeweils ein Wulst 14 vorgesehen. Einzelheiten lassen sich anhand der vergrößerten Darstellung in Fig. 5 besser erkennen.

Auf die untere Frontleiste 13 parallel zur Längsrichtung des Leitungsführungskanals ist eine Klammer 20 aufgesteckt. In dieser sogenannten Lager- und Transportstellung ist die offene Vorderseite des Kanalunterteils 10 kaum beschränkt. Die Klammer 20 lässt sich auf der Frontleiste 13 nach rechts und links verschieben, was durch den Doppelpfeil 1 symbolisiert wird.

Fig. 2 zeigt das Kanalunterteil 10 der Fig. 1. Die Klammer 20 wurde um 45° hochgeschwenkt, was durch den Pfeil symbolisiert wird. Die Vorderseite des Kanalunterteils 10 ist teilweise verschlossen, so dass schon eingelegte Leitungen (nicht dargestellt) nicht herausfallen können. Gleichzeitig bleibt jedoch zwischen der Klammer 20 und der oberen Frontleiste 13 ausreichend Platz, um weitere Leitungen einlegen zu können.

Wie Fig. 2 erkennen lässt, besteht die Klammer 20 aus einem Mittelteil 21 und einem demgegenüber abgekröpften Kopf 22. Am Kopf 22 ist ein erster Haltezapfen 23 angeordnet, dessen Funktion anhand der Fig. 4 noch näher erläutert werden soll. Im Bereich der Abkröpfung erkennt man einen Schlitz 25, der es möglich macht, dass die Klammer wie in Fig. 1 dargestellt die Frontleiste und deren Wulst 14 sehr raumsparend umgreift.

Fig. 3 zeigt die Klammer 20 in ihrer 90°-Endstellung. Der Kopf 22 befindet sich jedoch noch auf der Vorderseite der oberen Frontleiste 13. In dieser Stellung lässt sich die Klammer 20 nicht mehr seitlich verschieben.

Fig. 4 zeigt die Klammer 20 in ihrer endgültigen Position. Der Kopf 22 der Klammer 20 befindet sich auf der Rückseite der oberen Frontleiste 13, der erste Haltezapfen 23 hat sich hinter dem Wulst 14 der oberen Frontleiste 13 verhakt Kanalunterteil 10 und Klammer 20 bilden eine stabile Einheit.

Fig. 5 zeigt den Kanal der Fig. 3 als Seitenansicht. Man erkennt, dass der Fuß 28 der Klammer 20 als federnde Zange ausgebildet und auf die untere Frontleiste 13 und deren Wulst 14 aufgerastet ist. Des weiteren ist auf der Unterseite des Kopfes 22 ein Montagekeil 24 vorgesehen, mit dessen Hilfe der Klammerkopf durch einfachen Fingerdruck unter die obere Frontleiste 13 und deren Wulst 14 gedrückt werden kann.

Eine Verstärkungsrippe 27 unter dem Mittelteil 21 sorgt für eine hohe Stabilität der Klammer 20.

Während bei dem in Fig. 5 dargestellten Kanalunterteil 10 der Wulst 14 an den Frontleisten 13 symmetrisch zur Frontleiste 13 ausgebildet war, zeigt Fig. 5' eine Ausführungsform mit einem unsymmetrischen Wulst 14' an den Frontleisten 13.

Fig. 6 zeigt die Klammer 20 in einer perspektivischen Draufsicht, Fig. 7 in einer perspektivischen Druntersicht. In diesen Darstellungen erkennt man im Bereich des Fußes 28 einen Rastnocken 29. Dieser rastet in der 90°-Endstellung der Klammer 20 hinter dem Wulst 14 der unteren Frontleiste 13 ein und fixiert die Klammer 20 in dieser Endstellung. Mit geringem Kraftaufwand lässt sich der Rastnocken 29 wieder lösen, wenn die Klammer 20 in die in den Fig. 1 und 2 dargestellten Positionen zurückgeschwenkt werden soll.

Fig. 7 zeigt eine alternative Klammer 20'. Diese unterscheidet sich von den in den Fig. 1 bis 6 abgebildeten Klammern dadurch, dass die Versteifungsrippe 27 sich an der Oberseite des Klammermittelteils 21 befindet. Dadurch bilden Mittelteil 21 und Kopf 22 eine gestreckte Ebene.

Die Fig. 8 bis 12 zeigen die Klammer 20 in fünf Ansichten. In Fig. 8 sind auch die nicht sichtbaren Linien eingetragen, um ein Gesamtbild der Klammer 20 zu vermitteln. Man erkennt einen zweiten Haltezapfen 26 im Bereich des Fußes 28, der dafür verantwortlich ist, dass die Klammer 20 sicher auf der unteren Frontleiste 13 sitzt und gleichzeitig geschwenkt werden kann, sowie den Rastnocken 29, der die 90°-Endstellung der Klammer 20 fixiert.

Schließlich erkennt man im Bereich des Fußes 28 einen Nocken 30, der ebenfalls mit dem Wulst 14 der Frontleiste 13 kooperiert. Die Wirkfläche des Nockens 30 ist gegen die Längsrichtung der Klamme 20 geneigt, beispielsweise um 45°, und definiert so die in Fig. 2 dargestellte Position der Klammer 20.

Fig. 12 zeigt analog der Fig. 8 eine Draufsicht auf die Klammer 20, jedoch ohne den oberen Schenkel des zangenartigen Fußes 28. Man erkennt im Bereich des Fußes 28 sowohl den Rastnocken 29 als auch den Nocken 30.

Fig. 13 zeigt eine Draufsicht auf die Unterseite der alternativen Klammer 20' aus Fig. 5' ohne den oben liegenden Teil des zangenartigen Fußes 28. Dadurch erkennt man den zweiten Haltestift 26', hier als polygonaler Zylinder ausgebildet, der mit dem Wulst 14, 14' kooperiert und dessen ebene Mantelflächen die bevorzugten Raststellungen von 0°, 90° und beispielsweise 45° definieren.

Fig. 14 zeigt eine Draufsicht auf die Oberseite einer dritten Klammer (20"). Diese besitzt im Bereich des Fußes (28) eine zusätzliche Griffmulde (31), die das Drehen der Klammer (20") durch den Elektriker erleichtert. Außerdem sind bei dieser Klammer (20") der Rastnocken (29) und der zweite Haltezapfen (26) auf derselben Seite des Fußes (28) angebracht Das Rastelement (23') im Bereich des Kopfes (22) ist als lange Leiste ausgebildet, die einen flächenhaften Kontakt mit den Wulsten (14, 14') der Frontleisten (13) herstellt.

## Patentansprüche

1. Leitungsführungskanal, mindestens umfassend
- ein Kanalunterteil (10) mit
- einem Boden (11),
- Seitenwänden (12)
- und sich parallel zum Boden (11) erstreckenden Frontleisten (13), die an ihrer freien Kante ein Profil (14) aufweisen
- und wenigstens eine Klammer (20, 20', 20"), mindestens umfassend
- ein Mittelteil (21),
- einen Kopf (22) mit einem ersten Halteelement (23), das sich hinter dem einen Profil (14) einrasten lässt,
- einen Fuß (28) mit einem zweiten Halteelement (26, 26'), das sich auf das Profil (14) aufrasten lässt,
**gekennzeichnet durch** die Merkmale:
- das Profil an den Frontleisten (13) ist als Wulst (14, 14') ausgebildet,
- der Fuß (28) ist als federnde Zange ausgebildet
- und das zweite Halteelement ist als Haltezapfen (26, 26') ausgebildet, der dafür verantwortlich ist, dass die Klammer (20, 20', 20") sicher auf der Frontleiste (13) sitzt und gleichzeitig geschwenkt werden kann.

2. Leitungsführungskanal nach Anspruch 1, **gekennzeichnet durch** das Merkmal:
- der Kopf (22) ist gegenüber dem Mittelteil (21) abgekröpft.

3. Leitungsführungskanal nach Anspruch 2, **gekennzeichnet durch** das Merkmal:
- in der Abkröpfung zwischen Kopf (22) und Mittelteil (21) ist ein Schlitz (25) vorgesehen,
- der Schlitz (25) kooperiert mit einer Frontleiste (13) und deren Wulst (14, 14').

4. Leitungsführungskanal nach einem der Ansprüche 1 bis 3, **gekennzeichnet durch** das Merkmal:
- im Bereich des Fußes (28) ist ein Rastnocken (29) vorgesehen, der hinter dem Wulst (14, 14') lösbar einrastet und so eine bestimmte Winkelposition der Klammer (20, 20') definiert.

5. Leitungsführungskanal nach Anspruch 4, **gekennzeichnet durch** das Merkmal:
- Rastnocken (29) und zweiter Haltezapfen (26) sind nebeneinander am Fuß (28) positioniert.

6. Leitungsführungskanal nach einem der Ansprüche 1 bis 5, **gekennzeichnet durch** die Merkmale:
- im Bereich des Fußes (28) ist ein Nocken (30) vorgesehen, der mit dem Wulst (14, 14') kooperiert und so eine bevorzugte Winkelposition der Klammer (20, 20') definiert.

7. Leitungsführungskanal nach einem der Ansprüche 1 bis 3, **gekennzeichnet durch** das Merkmal:
- der zweite Haltezapfen (26') ist ein polygonaler Zylinder, dessen ebene Wandflächen mit dem Wulst (14, 14') kooperieren und so bevorzugte Winkelpositionen der Klammer (20') definieren.

8. Leitungsführungskanal nach einem der Ansprüche 1 bis 7, **gekennzeichnet durch** das Merkmal:
- an der Unterseite des Kopfes (22) ist ein als Montagehilfe wirkender Keil (24) vorgesehen.

9. Leitungsführungskanal nach einem der Ansprüche 1 bis 8, **gekennzeichnet durch** das Merkmal:
- am Mittelteil (21) ist eine Versteifungsrippe (27) vorgesehen.

10. Leitungsführungskanal nach einem der Ansprüche 1 bis 9, **gekennzeichnet durch** das Merkmal:
- der Wulst (14) ist symmetrisch zur Frontleiste (13) geformt.

## Claims

1. Wiring trunking, at least comprising
- a trunking lower part (10) with
- a bottom (11),
- side walls (12)
- and front strips (13) which extend parallel to the bottom (11) and have a profile (14) at their free edge,
- and at least one clamp (20, 20', 20"), at least comprising
- a centre part (21),
- a head (22) with a first retaining element (23) which can engage behind one profile (14),
- a foot (28) with a second retaining element (26, 26') which can lock onto the profile (14),
**characterised by** the features:
- the profile at the front strips (13) is formed as a bead (14, 14'),
- the foot (28) is formed as resilient tongs
- and the second retaining element is formed as a retaining pin (26, 26') which is responsible for seating the clamp (20, 20', 20") securely on the front strip (13) and enabling it to pivot at the same time.

2. Wiring trunking according to Claim 1, **characterised by** the feature:
- the head (22) is offset with respect to the centre part (21).

3. Wiring trunking according to Claim 2, **characterised by** the features:
- a slot (25) is provided in the offset between the head (22) and the centre part (21),
- the slot (25) co-operates with a front strip (13) and the bead (14, 14') thereof.

4. Wiring trunking according to any one of Claims 1 to 3, **characterised by** the feature:
- a locking protuberance (29) is provided in the region of the foot (28), which protuberance engages in a releasable manner behind the bead (14, 14') and thus defines a certain angular position of the clamp (20, 20').

5. Wiring trunking according to Claim 4, **characterised by** the feature:
- the locking protuberance (29) and the second retaining pin (26) are positioned side by side at the foot (28).

6. Wiring trunking according to any one of Claims 1 to 5, **characterised by** the feature:
- a protuberance (30) is provided in the region of the foot (28), which protuberance co-operates with the bead (14, 14') and thus defines a preferred angular position of the clamp (20, 20').

7. Wiring trunking according to any one of Claims 1 to 3, **characterised by** the feature:
- the second retaining pin (26') is a polygonal cylinder, the plane wall faces of which co-operate with the bead (14, 14') and thus define preferred angular positions of the clamp (20').

8. Wiring trunking according to any one of Claims 1 to 7, **characterised by** the feature:
- a wedge (24) acting as an assembly aid is provided at the underside of the head (22).

9. Wiring trunking according to any one of Claims 1 to 8, **characterised by** the feature:
- a stiffening rib (27) is provided at the centre part (21).

10. Wiring trunking according to any one of Claims 1 to 9, **characterised by** the feature:
- the bead (14) is formed symmetrically with respect to the front strip (13).

## Revendications

1. Goulotte de câbles comprenant au moins :
- une partie inférieure de goulotte (10) dotée
- d'un fond (11),
- de parois latérales (12),
- et de baguettes frontales (13) s'étendant parallèlement au fond (11), qui présentent un profilé (14) sur leur arête libre,
- et au moins une pince (20, 20', 20") comprenant au moins
- une partie centrale (21),
- une tête (22) munie d'un premier élément de fixation (23) pouvant être enclenché derrière l'un des profilés (14),
- un pied (28) portant un second élément de fixation (26, 26') pouvant venir s'enclencher sur le profilé (14),
**caractérisée en ce que**
- le profilé sur les baguettes frontales (13) est réalisé en tant que renflement (14,14'),
- le pied (28) est réalisé en tant que pince faisant ressort,
- et le second élément de fixation est réalisé sous forme de cheville de fixation (26, 26') qui confère à la pince (20, 20', 20") une bonne assise sur la baguette frontale (13), tout en l'autorisant à pivoter.

2. Goulotte de câbles selon la revendication 1, **caractérisée en ce que** la tête (22) est coudée par rapport à la partie centrale (21).

3. Goulotte de câbles selon la revendication 2, **caractérisée en ce qu'**une fente (25) est prévue dans le coude entre la tête (22) et la partie centrale (21), et **en ce que** la fente (25) coopère avec une baguette frontale (13) et son renflement (14, 14').

4. Goulotte de câbles selon l'une des revendications 1 à 3, **caractérisée en ce qu'**une saillie d'enclenchement (29) est prévue dans la zone du pied (28), qui s'enclenche de manière amovible derrière le renflement (14, 14') et qui définit ainsi une certaine position angulaire de la pince (20, 20').

5. Goulotte de câbles selon la revendication 4, **caractérisée en ce que** la saillie d'enclenchement (29) et la seconde cheville de fixation (26) sont placées côte à côte sur le pied (28).

6. Goulotte de câbles selon l'une des revendications 1 à 5, **caractérisée en ce qu'**une saillie (30) est prévue dans la zone du pied (28), qui coopère avec le renflement (14, 14') et qui définit ainsi une position angulaire préférentielle de la pince (20, 20').

7. Goulotte de câbles selon l'une des revendications 1 à 3, **caractérisée en ce que** la seconde cheville de fixation (26') est un cylindre polygonal dont les surfaces de paroi planes coopèrent avec le renflement (14, 14') et définissent ainsi des positions angulaires préférentielles de la pince (20').

8. Goulotte de câbles selon l'une des revendications 1 à 7, **caractérisée en ce qu'**un coin (24) faisant office d'aide pour le montage est prévu sur le dessous de la tête (22).

9. Goulotte de câbles selon l'une des revendications 1 à 8, **caractérisée en ce qu'**une nervure de renforcement (27) est prévue sur la partie centrale (21).

10. Goulotte de câbles selon l'une des revendications 1 à 9, **caractérisée en ce que** le renflement (14) est formé de façon symétrique par rapport à la baguette frontale (13).
